# EUROPÄISCHE PATENTSCHRIFT

(11) **EP 2 789 413 B1**
(45) Veröffentlichungstag und Bekanntmachung des Hinweises auf die Patenterteilung: **16.01.2019**
(21) Anmeldenummer: 13162645.9
(22) Anmeldetag: 08.04.2013
(51) Int. Cl.: B22F 3/105, B23K 26/03, B23K 26/342, B33Y 30/00, B33Y 50/02, B23K 101/00, B29C 64/153

(54) **Temperaturregelung für eine Vorrichtung zur generativen Herstellung von Bauteilen und entsprechendes Herstellungsverfahren**
Temperature control for a device for the generative production of components and a corresponding manufacturing method
Régulation de température pour un dispositif de fabrication générative de composants et procédé de fabrication correspondant

(43) Veröffentlichungstag der Anmeldung: 15.10.2014
(73) Patentinhaber: MTU Aero Engines AG, 80995 München (DE)
(72) Erfinder: Jakimov, Andreas, Dr., 81245 München (DE); Hanrieder, Herbert, 85411 Hohenkammer (DE)

(56) Entgegenhaltungen:
- WO-A1-2013/152751
- CN-A- 102 179 517
- US-A1- 2011 042 031

## Beschreibung

### HINTERGRUND DER ERFINDUNG

### GEBIET DER ERFINDUNG

Die vorliegende Erfindung betrifft ein Verfahren sowie eine Vorrichtung zur Herstellung von Bauteilen durch ein generatives Herstellungsverfahren, insbesondere ein Verfahren mittels selektiven Bestrahlens eines Pulverbetts.

### STAND DER TECHNIK

Aus dem Stand der Technik sind generative Herstellungsverfahren zur schnellen Herstellung von Prototypen oder zur Herstellung von Bauteilen, die mit anderen Verfahren schwierig herzustellen sind, bekannt. Unter anderem werden hierfür Verfahren wie das selektive Laserschmelzen (SLM Selective Laser Melting), das direkte Metalllasersintern (DMLS Direct Metal Laser Sintering) oder Elektronenstrahlenverfahren eingesetzt. Aus dem Stand der Technik sind insbesondere auch generative Herstellverfahren für die Herstellung von Bauteilen einer Strömungsmaschine, wie beispielsweise von Bauteilen eines Flugtriebwerks oder einer Gasturbine bekannt, z.B. das in der DE 10 2009 051 479 A1 beschriebene Verfahren bzw. eine entsprechende Vorrichtung zur Herstellung eines Bauteils einer Strömungsmaschine.

Bei diesem Verfahren wird durch schichtweisen Auftrag von mindestens einem pulverförmigen Bauteilwerkstoff auf einer Bauteilplattform im Bereich einer Aufbau- und Fügezone sowie schichtweises und lokales Schmelzen oder Sintern des Bauteilwerkstoffs mittels im Bereich der Aufbau- und Fügezone zugeführter Energie ein entsprechendes Bauteil hergestellt. Die Zufuhr der Energie erfolgt hierbei über Laserstrahlen, wie beispielsweise CO₂-Laser, Nd:YAG-Laser, Yb-Faserlaser sowie Diodenlaser, oder durch Elektronenstrahlen. Bei dem in der DE 10 2009 051 479 A1 beschriebenen Verfahren wird weiterhin das erzeugte Bauteil bzw. die Aufbau- und Fügezone auf eine Temperatur knapp unterhalb des Schmelzpunkts des Bauteilwerkstoffs mittels eines Zonenofens erwärmt, um eine gerichtet erstarrte oder einkristalline Kristallstruktur aufrechtzuerhalten.

Aus der DE 10 2006 058 949 A1 ist ebenfalls eine Vorrichtung und ein Verfahren zur schnellen Herstellung und Reparatur von Schaufelspitzen von Schaufeln einer Gasturbine, insbesondere eines Flugtriebwerks bekannt, wobei eine induktive Heizung zusammen mit Laser- oder Elektronenstrahlsintern eingesetzt wird.

Eine induktive Heizung des herzustellenden Bauteils im Zusammenhang mit der generativen Herstellung eines Bauteils mit Hilfe von selektivem Laserschmelzen ist auch in der EP 2 359 964 A1 beschrieben.

Die WO 2008/071165 A1 beschreibt wiederum eine Vorrichtung und ein Verfahren zur Reparatur von Turbinenschaufeln von Gasturbinen mittels Pulverauftragsschweißen, wobei für die Auftragsschweißung eine Strahlungsquelle, wie ein Laser oder ein Elektronenstrahl, Verwendung findet. Zugleich wird über eine Induktionsspule eine Heizvorrichtung zur Beheizung der zu reparierenden Schaufel bereitgestellt.

Aus der CN102179517 A ist eine Vorrichtung und ein Verfahren zur generativen Herstellung von Bauteilen bekannt, wobei induktive Heizung eingesetzt wird zur Vermeidung von Heißrissen. Obwohl aus dem Stand der Technik somit bekannt ist, bei einem generativen Herstellverfahren, bei welchem Pulverpartikel mittels Bestrahlung zur Bildung eines Bauteils geschmolzen oder gesintert werden, zusätzlich eine Beheizung des Bauteils vorzusehen und diese zusätzliche Beheizung mittels induktiver Erwärmung zu realisieren, bestehen weiterhin Probleme derartige generative Herstellungsverfahren für Hochtemperaturlegierungen einzusetzen, die nicht schmelz- bzw. schweißbar sind, da es bei derartigen Legierungen häufig zu inakzeptablen Heißrissen kommt.

### OFFENBARUNG DER ERFINDUNG

### AUFGABE DER ERFINDUNG

Es ist deshalb Aufgabe der vorliegenden Erfindung, ein Verfahren sowie eine Vorrichtung zur generativen Herstellung von Bauteilen bereitzustellen, bei dem in effektiver Weise die Bildung von Rissen während der Herstellung vermieden wird. Gleichzeitig soll die Vorrichtung einfach aufgebaut und das Verfahren einfach, aber möglichst schnell und effizient durchführbar sein.

### TECHNISCHE LÖSUNG

Diese Aufgabe wird gelöst durch eine Vorrichtung mit den Merkmalen des Anspruchs 1 und ein Verfahren mit den Merkmalen des Anspruchs 9. Vorteilhafte Ausgestaltungen sind Gegenstand der abhängigen Ansprüche.

Die vorliegende Erfindung schlägt vor, zur Lösung der oben genannten Aufgabe und insbesondere zur Vermeidung von Rissen eine lokale und individuell auf die Bauteilgeometrie angepasste induktive Erwärmung vorzusehen, die durch eine definierte Temperaturüberwachung und Regelung der Betriebsparameter auf Basis der Temperaturmessung eine bestimmte Temperatureinstellung ermöglicht, um in definierter Weise eine notwendige Erwärmung des Bauteils vorzunehmen. Hierzu wird eine Vorrichtung vorgeschlagen, bei der für die induktive Erwärmung des generativ hergestellten Bauteils mindestens zwei Induktionsspulen relativ zu einem oder mehreren Pulverbetträumen, in denen das Pulverbett für die generative Herstellung des Bauteils zur Verfügung gestellt wird, bewegbar bzw. positionierbar sind. Die relative Bewegbarkeit der Induktionsspulen zu dem Pulverbettraum kann entweder durch Bewegung der Induktionsspulen oder durch Bewegung des Pulverbettraums erfolgen.

Darüber hinaus ist weiterhin eine Temperaturmesseinrichtung zur Messung der Temperatur an mindestens einem Punkt des Pulverbetts und/oder des zu erzeugenden Bauteils sowie eine Regelungseinrichtung zur Regelung der Betriebsparameter der Induktionsspulen und/oder der Strahlquelle vorgesehen, wobei die Regelungseinrichtung, die von der Temperaturmesseinrichtung gemessene Temperatur als Regelgröße empfängt. Durch das Vorsehen der Temperaturmesseinrichtung und der Regelungseinrichtung können gewünschte Temperaturverhältnisse eingestellt werden, da die Regelungseinrichtung die Betriebsparameter der Induktionsspulen und/oder der Strahlquelle verändert, wenn die gemessene Temperatur von der voreingestellten Temperatur abweicht. Unter Betriebsparameter der Induktionsspulen und/oder der Strahlquelle werden sowohl die Positionierung der Induktionsspulen und/oder des Strahls der Strahlenquelle verstanden, als auch sonstige Betriebsparameter, wie beispielsweise Leistungsaufnahme der entsprechenden Komponenten und dergleichen.

Die Vorrichtung ist hierbei so eingerichtet, dass die Temperaturmessung zumindest an einem Messpunkt erfolgt, der zumindest bezüglich einer Raumrichtung relativ zur Position der Induktionsspulen und/oder des Strahls der Strahlenquelle fixiert ist, um gleichbleibende Bedingungen bezüglich des Aufschmelzbereichs einzustellen. Dadurch lassen sich in definierter Weise die gewünschten Temperaturen im Aufschmelzbereich sowie im Bereich des noch nicht aufgeschmolzenen Pulvers bzw. der bereits wieder erstarrten Schmelze und somit entsprechend lokal definierte Temperaturgradienten einstellen, die ein sicheres und schadensfreies Erstarren, auch von schwer schmelz-schweißbaren Legierungen, wie beispielsweise Hochtemperaturlegierungen ermöglichen. Gleichzeitig kann sicher gestellt werden, dass eine möglichst hohe Bearbeitungsgeschwindigkeit erreicht werden kann.

Als Temperaturmesseinrichtung kann eine Wärmebildkamera eingesetzt werden, bei welcher aus dem Wärmebild an definierten Punkten die Temperatur bestimmt werden kann. Damit eine gleichbleibende Bestimmung der Temperatur in Bezug auf die Position der Induktionsspulen und/oder des Strahls des Strahlquelle durchgeführt werden kann, kann einer Auswerteeinheit der Wärmebildkamera die Position der Induktionsspulen und/oder des Strahls der Strahlquelle übermittelt werden, sodass der Temperaturmesswert in Bezug auf die richtige Position zu den Induktionsspulen und/oder dem Strahl der Strahlquelle bestimmt werden kann.

Unter Induktionsspule wird im Rahmen der vorliegenden Erfindung jede Vorrichtung verstanden, die eine induktive Erwärmung erzeugen kann, also beispielsweise unabhängig von der Anzahl der Windungen, so dass die Induktionsspule beispielsweise auch als Induktionsschleife bezeichnet werden kann.

Die vorliegende Erfindung, d.h. die Anordnung von relativ zu einem oder mehreren Pulverbetträumen bewegbaren Induktionsspulen, kann bei verschiedenen Vorrichtungen bzw. Verfahren zur generativen Herstellung von Bauteilen aus einem Pulver eingesetzt werden, wie beispielsweise bei den eingangsbeschriebenen Verfahren und Vorrichtungen zum selektiven Laserschmelzen SLM oder dem direkten Metalllasersintern DLS bzw. entsprechenden Elektronenstrahlverfahren. Entsprechend kann die Strahlquelle der Vorrichtung zur generativen Herstellung von Bauteilen jede hierfür geeignete Strahlquelle sein.

Die Vorrichtung zur generativen Herstellung von Bauteilen kann so ausgebildet sein, dass die mehreren Induktionsspulen in verschiedenen Positionen relativ zu dem oder den Pulverbetträumen angeordnet werden können. Dies können definierte Positionen in bestimmten Abständen zueinander sein oder es kann eine stufenlose Bewegbarkeit und Positionierbarkeit der Induktionsspulen verwirklicht sein.

Die Induktionsspulen können in jeder geeigneten Position, in der eine induktive Erwärmung des generativ herzustellenden Bauteils realisiert werden kann, angeordnet werden. Insbesondere kann jede Induktionsspule oberhalb und/oder seitlich des oder der Pulverbetträume angeordnet werden.

Nach einer Ausgestaltung können die Induktionsspulen in mehreren versetzten Ebenen, beispielsweise entlang einer Schienenanordnung oder entlang zweier gekreuzt zueinander angeordneter Schienenanordnungen verschiebbar sein, so dass die Induktionsspulen in jeweils einer Ebene in verschiedenen Positionen angeordnet werden können, wobei die Ebenen parallel zu einer Fläche des Pulverbettraums sind, in der das Pulver durch Bestrahlung zu einem Bauteil verbunden wird. Da bei der generativen Herstellung von Bauteilen aus einem Pulver das Bauteil lagenweise entsteht, kann durch die geeignete Positionierung der Induktionsspulen in einer Ebene parallel zu der Fläche, in der die Lage aufgebracht wird, je nach Geometrie der Bauteillage, eine geeignete Position der Induktionsspulen gewählt werden. Insbesondere ist es hierbei möglich, die während des Entstehungsprozess sich verändernde Bauteilgeometrie für die induktive Erwärmung zu berücksichtigen. So kann sich beispielsweise der Querschnitt des Bauteils in der Aufbaurichtung erheblich verändern, also beispielsweise vergrößern oder verkleinern, so dass durch eine Bewegung der Induktionsspulen der Bauteilgeometrie gefolgt werden kann und somit eine exakte und genaue induktive Erwärmung des Bauteils erzielt werden kann.

Darüber hinaus ist es jedoch auch möglich, die Induktionsspulen so auszubilden, dass sie in einer Richtung quer zu der Fläche des Pulverbettraums verstellt werden können, in der das Pulver durch Bestrahlung zu einem Bauteil verbunden wird, so dass durch die Variation des Abstands von dem zu erzeugenden Bauteil mit der Induktionsspulen die Erwärmung gesteuert werden kann.

Da mehrere Pulverbetträume in einem Arbeitsraum angeordnet sein können, können mehrere Induktionsspulen eingesetzt werden, die bezüglich verschiedener oder eines einzigen Pulverbettraums positionierbar sind. Dabei kann die Positionierung der Induktionsspulen unabhängig voneinander erfolgen. Lediglich mögliche Kollisionen von Induktionsspulen untereinander beschränken hierbei die individuelle Beweglichkeit einer Induktionsspule.

Insbesondere können zwei Induktionsspulen in zueinander gekreuzter Anordnung betrieben werden, wobei insbesondere im Kreuzungsbereich der Strahl der Strahlquelle zum Aufschmelzen des Pulvers vorgesehen sein kann.

Die Induktionsspulen und/oder der Strahl der Strahlquelle könne unabhängig voneinander aufgrund der Messergebnisse einer oder mehrerer Temperaturmesseinrichtungen gesteuert bzw. geregelt werden. Allerdings ist eine kombinierte Regelung, die die Wirkungsweisen der jeweils anderen Komponente berücksichtigt, vorteilhaft, um durch ein abgestimmtes Betreiben von Induktionsspulen und/oder Strahlquelle eine optimale Temperatureinstellung zu ermöglichen.

Die zur Erzielung definierter Temperaturverhältnisse vorgeschlagene Fixierung eines Temperaturmesspunkts zu einer Induktionsspule und/oder zum Strahl der Strahlquelle kann für jeweils einen oder mehrere Messpunkte pro Induktionsspule oder Strahl realisiert sein und/oder ein Temperaturmesspunkt kann mit Bezug auf mehrere Komponenten, wie Induktionsspulen und Strahl der Strahlquelle fixiert sein, wobei die Fixierung beispielsweise in Bezug auf unterschiedliche Raumrichtungen erfolgen kann. So kann beispielsweise ein erster Temperaturmesspunkt bezüglich der X-Richtung einer ersten Induktionsspule, sowie gleichzeitig bezüglich der Y-Richtung einer zweiten Induktionsspule fixiert sein, während ein zweiter Temperaturmesspunkt bezüglich der zweiten Induktionsspule und der Y-Richtung der ersten Induktionsspule fixiert ist. Selbstverständlich kann jedoch ein Temperaturmesspunkt auch bezüglich mehrerer Raumrichtungen, insbesondere unabhängiger Raumrichtungen zu einer Induktionsspule oder dem Strahl der Strahlquelle fixiert sein.

Für die Temperaturregelung können mehrere Temperaturmesspunkte Verwendung finden, wobei beispielsweise ein Messpunkt die Vorheizung des Pulvers erfassen kann, während ein anderer Messpunkt die thermische Nachbehandlung des bereits erstarrten Bauteils erfassen und regeln kann.

Bei der generativen Herstellung eines Bauteils kann durch die beschriebene Vorrichtung die Position einer oder mehrerer Induktionsspulen zur induktiven Erwärmung des Bauteils individuell nach der zu erzeugenden Bauteilgeometrie und/oder einer ermittelten Temperatur bestimmt und entsprechend eingestellt werden. Zusätzlich kann die Leistung der Induktionsspulen in geeigneter Weise gesteuert und/oder geregelt werden, indem beispielsweise die Frequenz, mit der die Induktionsspulen betrieben werden, angepasst wird. Damit ist eine sehr exakte und definierte Temperatureinstellung für das generativ herzustellende Bauteil möglich und es können entsprechende Rissbildungen in Bauteilen vermieden werden, insbesondere, wenn sie aus Materialien hergestellt werden sollen, die für Rissbildung anfällig sind.

### KURZBESCHREIBUNG DER FIGUREN

Die beigefügten Zeichnungen zeigen in rein schematischer Weise in
- Fig. 1: eine Querschnittansicht durch einen Pulverbettraum eines Bearbeitungsraums einer erfindungsgemäßen Vorrichtung;
- Fig. 2: eine Draufsicht auf eine weitere erfindungsgemäße Vorrichtung mit insgesamt drei Pulverbetträumen zur parallelen Herstellung von drei Bauteilen und zwei verschiebbaren Spulen; und in
- Fig. 3: eine Detailansicht des Bearbeitungsbereichs aus Fig. 2.

### AUSFÜHRUNGSBEISPIEL

Weitere Vorteile, Kennzeichen und Merkmale der vorliegenden Erfindung werden bei der nachfolgenden detaillierten Beschreibung von Ausführungsbeispielen anhand der beigefügten Figuren deutlich. Allerdings ist die Erfindung nicht auf diese Ausführungsbeispiele beschränkt.

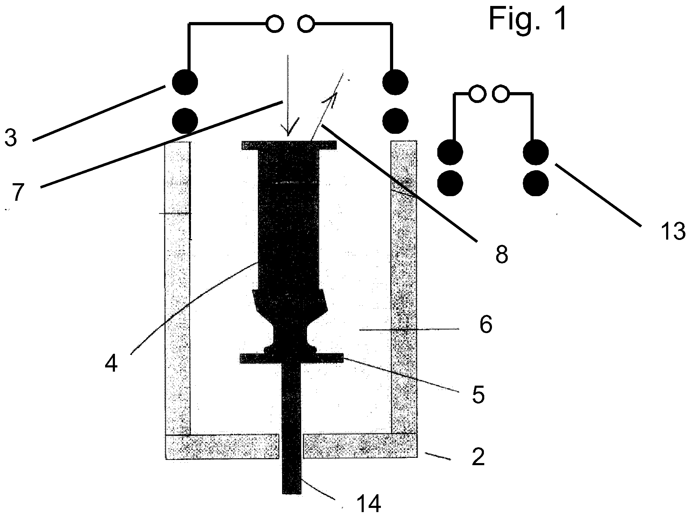

Die Fig. 1 zeigt einen Querschnitt durch einen Pulverbettraum 2, in dem beispielsweise eine einzelne Turbinenschaufel 4 hergestellt wird. Der Pulverbettraum 2 ist im Wesentlichen als ein Gefäß ausgebildet, in welchem eine Plattform 5 über einen Stempel 14 verfahrbar angeordnet ist. In dem Pulverbettraum 2 wird Pulver oberhalb der Plattform 5 bereitgestellt, die zunächst im oberen Bereich des Pulverbettraums 2 angeordnet ist, sodass dort ein Laserstrahl 7 das auf der Plattform 5 befindliche Pulver aufschmelzen kann, wobei nach dem Erstarren des aufgeschmolzenen Pulvers ein Querschnittbereich eines entsprechendes Bauteil entsteht. Durch schrittweises Absenken der Plattform 5 und Überfüllen mit Pulver 6 sowie Aufschmelzen des Pulvers schichtweise entsprechend der herzustellenden Kontur wird Schritt für Schritt die Turbinenschaufel 4 hergestellt.

Zur Vermeidung von Rissen oder dgl. bei der Herstellung wird die teilweise hergestellte Turbinenschaufel 4 im Bereich des bereits erschmolzenen und gegebenenfalls bereits erstarrten Materials induktiv erwärmt bzw. auf Temperatur gehalten oder langsam und kontrolliert abgekühlt (Nachwärmen). Hierzu werden zwei Induktionsspulen 3,13 verwendet, die oberhalb und/oder seitlich des Bauteils bzw. der Turbinenschaufel angeordnet sind. Zusätzlich können die Induktionsspulen zur Vorwärmung des Pulvers eingesetzt werden, so dass der Laserstrahl 7 nur eine geringe Erwärmung bis zum Erschmelzen bewirken muss.

Zur Überwachung der Vorwärmtemperatur und/oder der Nachwärmtemperatur wird ein Pyrometer oder eine Wärmebildkamera eingesetzt, die die Wärmestrahlung 8 erfassen und entsprechend die Temperatur bestimmen kann.

Um eine exakte Temperaturführung zu ermöglichen, kann mittels der erfassten Temperatur als Steuer- oder Regelgröße die Steuerung bzw. Regelung der Induktionsspulen 3,13 vorgenommen werden, und zwar hinsichtlich der Position, in der die Spulen angeordnet werden, und/oder der Leistung, mit der die Spulen betrieben werden. Hierzu kann eine entsprechende Steuerung bzw. Regelung vorzugsweise basierend auf einer Datenverarbeitungsanlage mit entsprechender Software vorgesehen werden.

Darüber hinaus kann die Positionierung der Induktionsspulen 3, 13 in Abhängigkeit der zu erzeugenden Bauteilgeometrie vorbestimmt werden. Da sich die Bauteilgeometrie während des Herstellungsprozesses ändern kann, können auch die Positionen der Induktionsspulen 3,13 entsprechend verändert werden.

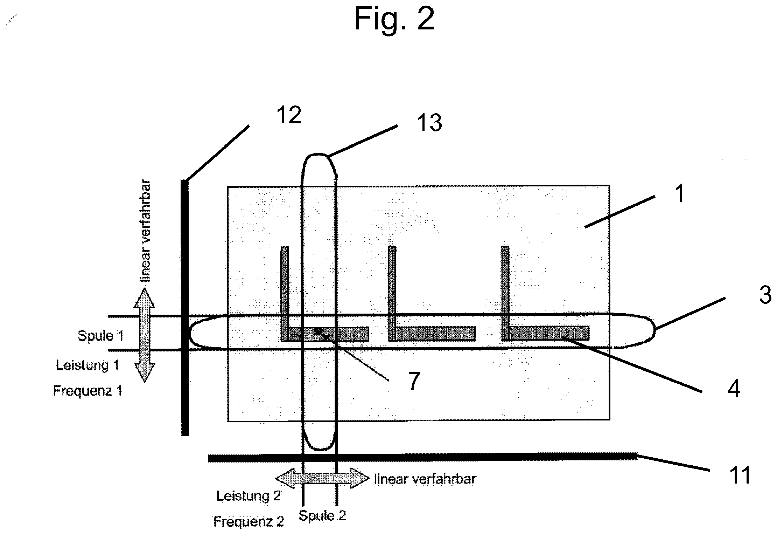

Die Figur 2 zeigt eine Draufsicht auf eine weitere Ausführungsform einer erfindungsgemäßen Vorrichtung, die zumindest teilweise identisch zur Ausführungsform der Fig. 1 ist bzw. in der zumindest Teile identisch ausgeführt sein können. Bei der Ausführungsform der Fig. 2 können in einem Arbeitsraum 1 drei Bauteile 4 parallel hergestellt werden. Die entsprechenden Pulverbetträume sind in der Figur 2 nicht explizit dargestellt.

Die Vorrichtung gemäß Figur 2 umfasst zwei Spulen 3,13, die entlang der Schienenanordnungen 11,12 linear verfahrbar sind. Die Spulen 3, 13 erstrecken sich hierbei über die gesamte Breite bzw. Länge des Arbeitsraums 1 und können somit sämtliche Bereiche für die Herstellung von Bauteilen 4 abdecken. Alternativ ist es auch vorstellbar, die Spulen 3,13 kleiner auszubilden, so dass sie lediglich einen Teilbereich des Arbeitsraums 1 überdecken, wobei stattdessen zusätzlich eine lineare Verfahrbarkeit jeweils quer zu den Schienenanordnungen 11,12 vorgesehen werden kann, um die Spulen 3,13 an jeder Position des Arbeitsraums 1 positionieren zu können.

Die Figur 2 zeigt rein schematisch mit dem Laserstrahl 7, der von oben auf die zu erzeugenden Bauteile 4 gerichtet wird, wie der Laserstrahl über dem Arbeitsraum 1 verfahren werden kann, um die Bauteile 4 zu erzeugen. Um eine Abschattung des Laserstrahls 7 zu vermeiden, können entsprechen der Bewegung des Laserstrahls 7 auch die Spulen 3,13 bewegt werden, insbesondere kurzfristig aus dem Arbeitsbereich des Laserstrahls 7 heraus bewegt werden.

Die Spulen 3,13 sind entlang der Schienen 11,12 in einer Ebene bzw. zwei zueinander versetzten Ebenen verfahrbar, die im Wesentlichen parallel zu der Fläche ausgerichtet sind, in welcher das Pulver durch den Laserstrahl 7 aufgeschmolzen wird. Der Laserstrahl 7 kann insbesondere im Kreuzungsbereich der Spulen 3,13 vorgesehen werden, sodass einerseits das noch nicht aufgeschmolzene Pulver durch die Induktionsspulen 3,13 vorgewärmt und die bereits zu dem Bauteil erstarrte Schmelze einer Temperaturnachbehandlung unterzogen werden kann. Durch die Verfahrbarkeit der Induktionsspulen 3,13 sowie der entsprechenden Verfahrbarkeit und Ausrichtung des Laserstrahls 7 sind sämtlichen Bereiche eines Arbeitsraums 1 mit den Pulverbetträumen 2 erreichbar, sodass beliebige Bauteile 4 erzeugt und entsprechend behandelt werden können.

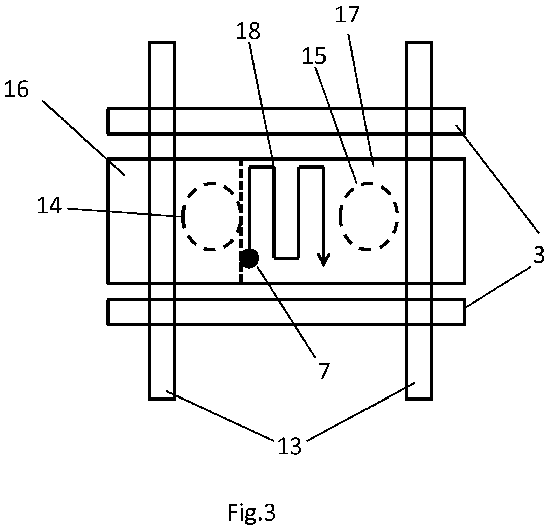

Die Figur 3 zeigt einen Ausschnitt aus der Figur 2 in größerem Detail, wobei insbesondere der Kreuzungsbereich der Induktionsspulen 3,13 gezeigt ist.

Innerhalb des Kreuzungsbereich ist der Laserstrahl 7 angeordnet, der entlang einer mäanderförmigen Laserspur 18 über das Pulverbett bewegt wird, um das Pulver aufzuschmelzen. Sobald sich der Laserstrahl 7 entsprechende der Laserspur 18 weiter bewegt hat, erstarrt die Schmelze wieder, um das zu erzeugende Bauteil zu bilden. Der erstarrte Bereich 16 ist in der Figur 3 im linken Bereich der Figur dargestellt. Entsprechend ist das lose Pulver, das auf dem darunterliegenden, bereits erzeugten Bauteil 4 zur Bildung der nächsten Schicht angeordnet ist, im rechten Teil der Figur 3 dargestellt und wird dort mit dem Bezugszeichen 17 für den Pulverbereich bezeichnet.

Den Induktionsspulen 3,13 ist jeweils ein Temperaturmesspunkt 14,15 zugeordnet, wobei der erste Temperaturmesspunkt 14 im Bereich 16 der erstarrten Schmelze angeordnet ist, während der zweite Temperaturmesspunkt 15 im Pulverbereich 17 vorgesehen ist. Mit der Bewegung des Laserstrahls 7 entlang des Laserpfads 18 über die Arbeitsfläche, können die Induktionsspulen 3,13 ebenfalls bewegt werden, um die Anordnung bezüglich des Laserstrahls 7 im Wesentlichen beizubehalten. Allerdings ist es nicht erforderlich, jede Bewegung des Laserstrahls 7 in eine entsprechende Bewegung der Induktionsspulen 3,13 umzusetzen, sondern es genügt beispielsweise, wenn der Laserstrahl 7 innerhalb des Kreuzungsbereichs der Induktionsspulen 3,13 bleibt. Im gezeigten Ausführungsbeispiel bedeutet dies, dass sich der Laserstrahl 7 entlang des Laserpfads 18 zwar oszillierend im Bild der Figur 3 nach oben und nach unten bewegt, jedoch bei dieser Bewegung den Kreuzungsbereich der Induktionsspulen 3,13 nicht verlässt. Insofern kann die Induktionsspule 3 ortsfest gehalten werden. Allerdings bewegt sich der Laserstrahl 7 entlang dem Laserpfad 18 im Bild der Figur 3 von links nach rechts, sodass die Induktionsspule 13 mit zunehmender Bewegung des Laserstrahls 7 nach rechts ebenfalls nach rechts bewegt wird. Gleichzeitig werden die Temperaturmesspunkte 14,15 entsprechende der Bewegung der Induktionsspule 13 eine Bewegung nach rechts durchführen, während in einer senkrechten Richtung dazu, also im Bild der Figur 3 nach oben oder unten die Temperaturmesspunkte 14,15 stationär zu der Induktionsspule 3 verbleiben. Entsprechend sind bei der gezeigten Ausführungsform die beiden Temperaturmesspunkte 14,15 jeweils in einer Richtung bezüglich jeder Spule 3,13 fixiert. In der Richtung, die von links nach rechts bzw. umgekehrt in Figur 3 verläuft, sind die Temperaturmesspunkte 14,15 bezüglich der Induktionsspule 13 fixiert, während in einer senkrechten Richtung dazu, also in einer Richtung in der Figur 3 von oben nach unten oder umgekehrt, sind die Temperaturmesspunkte 14,15 bezüglich der Induktionsspule 3 fixiert. Damit ist es möglich, mit Fortschreiten der Erstarrungsfront gleichbleibende Induktionsbedingungen zu erzielen, sodass gleichbleibende Schmelzbedingungen mit definierten, lokalen Temperaturgradienten bei hohen Produktionsgeschwindigkeiten einstellbar sind, wobei gleichzeitig die Ausbildung von Rissen und dergleichen beim Erstarren vermieden werden kann.

## Patentansprüche

1. Vorrichtung zur generativen Herstellung von Bauteilen (4) mittels selektivem Bestrahlen eines Pulverbetts (6), wobei die Vorrichtung einen Arbeitsraum (1) aufweist, in dem mindestens ein Pulverbettraum (2) und mindestens eine Strahlquelle angeordnet sind, so dass die Strahlquelle ein Pulver im Pulverbettraum (2) bestrahlen kann, und wobei die Vorrichtung mehrere Induktionsspulen (3,13) umfasst, so dass das Pulverbett und/oder ein Bauteil, das durch Bestrahlung (7) des Pulverbetts erzeugt wird, zumindest teilweise induktiv erwärmt werden kann, **dadurch gekennzeichnet, dass**
- mindestens zwei Induktionsspulen (3,13) unabhangig voneinander relativ zu dem oder den Pulverbetträumen (2) bewegbar sind und in einer oder mehreren Ebenen, die parallel zu einer Fläche des Pulverbettraums (2) sind, in der das Pulver durch Bestrahlung zu einem Bauteil (4) verbunden wird, verfahrbar sind,
wobei eine erste Induktionsspule entlang einer ersten Raumrichtung und eine zweite Induktionsspule entlang einer zweiten Raumrichtung, die zur ersten Raumrichtung unabhängig ist, verfahrbar ist und
- die Vorrichtung weiterhin eine Temperaturmesseinrichtung zur Messung der Temperatur an mindestens einem Punkt des Pulverbetts und/oder des zu erzeugenden Bauteils und eine Regelungseinrichtung zur Regelung der Betriebsparameter der Induktionsspulen und/oder der Strahlquelle umfasst, wobei
- die Regelungseinrichtung die von der Temperaturmesseinrichtung gemessene Temperatur als Regelgröße empfängt und
- die Temperaturmesseinrichtung so ausgebildet ist, dass der mindestens eine Messpunkt zumindest bezüglich einer Raumrichtung relativ zur Position der Induktionsspule und/oder des Strahls der Strahlquelle fixiert ist.

2. Vorrichtung nach Anspruch 1,
**dadurch gekennzeichnet, dass**
die Temperaturmesseinrichtung eine Wärmebildkamera umfasst.

3. Vorrichtung nach Anspruch 1 oder 2,
**dadurch gekennzeichnet, dass**
die Induktionsspulen (3,13) oberhalb und/oder seitlich des oder der Pulverbetträume (2) in verschiedenen Positionen angeordnet werden können.

4. Vorrichtung nach einem der vorhergehenden Ansprüche,
**dadurch gekennzeichnet, dass**
die Induktionsspulen (3,13) in einer Ebene in verschiedenen Positionen angeordnet werden können, wobei die Ebene parallel zu einer Fläche des Pulverbettraums (2) ist, in der das Pulver durch Bestrahlung zu einem Bauteil (4) verbunden wird.

5. Vorrichtung nach einem der vorhergehenden Ansprüche,
**dadurch gekennzeichnet, dass**
die Induktionsspulen (3,13) in ihrer Position in einer Richtung quer zu einer Fläche des Pulverbettraums (2) verstellbar sind, in der das Pulver (6) durch Bestrahlung zu einem Bauteil (4) verbunden wird.

6. Vorrichtung nach einem der vorhergehenden Ansprüche,
**dadurch gekennzeichnet, dass**
die Induktionsspulen (3,13) in Bezug zu einem einzigen Pulverbettraum (2) in gekreuzter Form angeordnet werden können.

7. Vorrichtung nach einem der vorhergehenden Ansprüche,
**dadurch gekennzeichnet, dass**
jede Induktionsspule und/oder jede Strahlquelle unabhängig voneinander durch die Regelungseinrichtung steuerbar ist.

8. Vorrichtung nach einem der vorhergehenden Ansprüche,
**dadurch gekennzeichnet, dass**
jeder Induktionsspule mindestens ein Messpunkt und/oder ein Messpunkt mehreren Induktionsspulen zugeordnet ist.

9. Verfahren zur generativen Herstellung von Bauteilen (4) mit einer Vorrichtung nach einem der vorhergehenden Ansprüche, welches selektives Bestrahlen eines Pulverbetts (6) mit einer Strahlquelle umfasst, wobei das hergestellte Bauteil (4) und/oder das Pulverbett (6) zugleich induktiv erwärmt wird,
**dadurch gekennzeichnet, dass**
- ausgehend von der Geometrie des zu erzeugenden Bauteils die Position mehrerer Induktionsspulen (3,13) für die induktive Erwärmung bestimmt und eingestellt wird und
- mindestens zwei Induktionsspulen in einer oder mehreren Ebenen, die parallel zu einer Fläche des Pulverbetts sind, in der das Pulver durch Bestrahlung zu einem Bauteil (4) verbunden wird, verfahren werden,
wobei eine erste Induktionsspule entlang einer ersten Raumrichtung und eine zweite Induktionsspule entlang einer zweiten Raumrichtung, die zur ersten Raumrichtung unabhängig ist, verfahren wird
- und mindestens an einem Punkt, der relativ zu den Induktionsspulen und/oder dem Strahl der Strahlquelle bezüglich mindestens einer Raumrichtung fixiert ist, die Temperatur des Pulverbetts und/oder des erzeugten Bauteils gemessen wird, mit der die Betriebsparameter der Induktionsspule und/oder der Strahlquelle gesteuert werden.

10. Verfahren nach Anspruch 9,
**dadurch gekennzeichnet, dass**
die Position der Induktionsspulen in Abhängigkeit von der Position des Strahls der Strahlquelle und/oder der gemessenen Temperatur eingestellt wird.

11. Verfahren nach Anspruch 9 oder 10,
**dadurch gekennzeichnet, dass**
erste und zweite Induktionsspule gekreuzt zueinander angeordnet werden und der Strahl der Strahlquelle im Kreuzungsbereich angeordnet ist.

12. Verfahren nach einem der Ansprüche 9 bis 11,
**dadurch gekennzeichnet, dass**
eine Induktionsspule zur Vorheizung des Bauteils und eine andere Induktionsspule zur Nachheizung des erzeugten Bauteils verwendet wird.

13. Verfahren nach einem der Ansprüche 9 bis 12,
**dadurch gekennzeichnet, dass**
für jede Induktionsspule mindestens an einem der Induktionsspule zugeordneten Messpunkt die Temperatur bestimmt wird.

## Claims

1. Apparatus for the generative production of components (4) by selectively irradiating a powder bed (6), the apparatus comprising a working chamber (1), in which at least one powder bed chamber (2) and at least one beam source are arranged, such that the beam source can irradiate a powder in the powder bed chamber (2), and the apparatus comprising a plurality of induction coils (3, 13), such that the powder bed and/or a component that is produced by irradiation (7) of the powder bed can be heated at least partially inductively, **characterized in that**
- at least two induction coils (3, 13) can be moved, independently of one another, relative to the powder bed chamber(s) (2) and in one or more planes which are in parallel with a surface of the powder bed chamber (2) in which the powder is bonded by means of irradiation so as to form a component (4),
a first induction coil being movable in a first spatial direction and a second induction coil being movable in a second spatial direction, which is independent of the first spatial direction,
- the apparatus further comprises a temperature measuring device for measuring the temperature at at least one point of the powder bed and/or of the component to be produced and a control device for controlling the operating parameters of the induction coils and/or of the beam source,
- the control device receiving the temperature measured by the temperature measuring device as a control variable and
- the temperature measuring device being designed such that the at least one measuring point is fixed relative to the position of the induction coil and/or the beam of the beam source at least with respect to a spatial direction.

2. Apparatus according to claim 1,
**characterized in that**
the temperature measuring device comprises a thermal imaging camera.

3. Apparatus according to either claim 1 or claim 2,
**characterized in that**
the induction coils (3, 13) can be arranged in different positions above and/or next to the powder bed chamber(s) (2).

4. Apparatus according to any of the preceding claims,
**characterized in that**
the induction coils (3, 13) can be arranged in different positions in a plane, the plane being in parallel with a surface of the powder bed chamber (2) in which the powder is bonded by means of irradiation so as to form a component (4).

5. Apparatus according to any of the preceding claims,
**characterized in that**
the position of the induction coils (3, 13) can be adjusted in a direction that is perpendicular to a surface of the powder bed chamber (2), in which the powder (6) is bonded by means of irradiation so as to form a component (4).

6. Apparatus according to any of the preceding claims,
**characterized in that**
the induction coils (3, 13) can be arranged crosswise with respect to a single powder bed chamber (2).

7. Apparatus according to any of the preceding claims,
**characterized in that**
each induction coil and/or each radiation source can be controlled by the control device independently of one another.

8. Apparatus according to any of the preceding claims,
**characterized in that**
at least one measuring point is associated with each induction coil and/or one measuring point is associated with a plurality of induction coils.

9. Method for the generative production of components (4) by means of an apparatus according to any of the preceding claims, which comprises selectively irradiating a powder bed (6) by means of a beam source, the produced component (4) and/or the powder bed (6) being inductively heated at the same time,
**characterized in that**
- the position of a plurality of induction coils (3, 13) for inductive heating is determined and set on the basis of the geometry of the component to be produced and
- at least two induction coils are moved in one or more planes which are in parallel with a surface of the powder bed, in which the powder is bonded by means of irradiation so as to form a component (4),
a first induction coil being moved in a first spatial direction and a second induction coil being moved in a second spatial direction, which is independent of the first spatial direction,
- and the temperature of the powder bed and/or of the produced component is measured at least at a point which is fixed relative to the induction coils and/or the beam of the beam source with respect to at least one spatial direction, by means of which temperature the operating parameters of the induction coil and/or of the beam source are controlled.

10. Method according to claim 9,
**characterized in that**
the position of the induction coils is set based on the position of the beam of the beam source and/or the measured temperature.

11. Method according to either claim 9 or claim 10,
**characterized in that**
the first and second induction coils are arranged crosswise with respect to one another and the beam of the beam source is arranged in the crossing region.

12. Method according to any of claims 9 to 11,
**characterized in that**
an induction coil is used to preheat the component and another induction coil is used to reheat the produced component.

13. Method according to any of claims 9 to 12,
**characterized in that**
for each induction coil, the temperature is determined at least at a measuring point associated with the induction coil.

## Revendications

1. Dispositif de fabrication de manière générative de composants (4) au moyen d'une irradiation sélective d'un lit de poudre (6), où le dispositif présente un espace de travail (1) dans lequel sont disposés au moins un espace de lit de poudre (2) et au moins une source de rayonnement, de sorte que la source de rayonnement peut irradier une poudre dans l'espace de lit de poudre (2) et le dispositif comprenant plusieurs bobines d'induction (3, 13) de sorte que le lit de poudre et/ou un composant qui est créé par l'irradiation (7) du lit de poudre peut être au moins partiellement réchauffé par induction,
**caractérisé en ce**
- **qu'**au moins deux bobines d'induction (3, 13) peuvent être déplacées indépendamment l'une de l'autre par rapport à l'espace ou aux espaces de lit de poudre (2) et peuvent être déplacées dans un ou plusieurs plans qui sont parallèles par rapport à une surface de l'espace de lit de poudre (2), dans lesquels la poudre est assemblée pour constituer un composant (4) par irradiation,
où la première bobine d'induction peut être déplacée le long d'une première direction spatiale et une deuxième bobine d'induction peut être déplacée dans une deuxième direction spatiale qui est indépendante de la première direction spatiale, et
- le dispositif comprend en outre un dispositif de mesure de la température pour la mesure de la température au niveau d'au moins un point du lit de poudre et/ou du composant à fabriquer, et un dispositif de régulation pour la régulation des paramètres de fonctionnement des bobines d'induction et/ou de la source de rayonnement, où
- le dispositif de régulation reçoit la température mesurée par le dispositif de mesure de la température sous la forme d'une grandeur de réglage, et
- le dispositif de mesure de la température est conçu de telle manière que l'au moins un point de mesure est fixé au moins en ce qui concerne une direction spatiale par rapport à la position de la bobine d'induction et/ou au faisceau de la source de rayonnement.

2. Dispositif selon la revendication 1,
**caractérisé en ce que**
le dispositif de mesure de la température comprend une caméra thermique.

3. Dispositif selon la revendication 1 ou 2,
**caractérisé en ce que**
les bobines d'induction (3, 13) peuvent être disposées au-dessus et/ou à côté de l'espace ou des espaces de lit de poudre (2) dans différentes positions.

4. Dispositif selon l'une des revendications précédentes,
**caractérisé en ce que**
les bobines d'induction (3, 13) peuvent être disposées dans un plan à différentes positions, le plan étant parallèle à une surface de l'espace de lit de poudre (2) dans laquelle la poudre est assemblée pour constituer le composant (4) par l'irradiation.

5. Dispositif selon l'une des revendications précédentes,
**caractérisé en ce que**
les bobines d'induction (3, 13) peuvent être réglées au niveau de leur position dans une direction perpendiculaire à une surface de l'espace de lit de poudre (2), dans laquelle la poudre (6) est assemblée pour constituer le composant (4) par l'irradiation.

6. Dispositif selon l'une des revendications précédentes,
**caractérisé en ce que**
les bobines d'induction (3, 13) peuvent être disposées sous forme croisée par rapport au cas d'un seul espace de lit de poudre (2).

7. Dispositif selon l'une des revendications précédentes,
**caractérisé en ce que**
chaque bobine d'induction, et/ou chaque source de rayonnement, peuvent être commandées indépendamment l'une de l'autre par le dispositif de régulation.

8. Dispositif selon l'une des revendications précédentes,
**caractérisé en ce**
**qu'**au moins un point de mesure est associé à chaque bobine d'induction et/ou un point de mesure est associé à plusieurs bobines d'induction.

9. Procédé de fabrication de manière générative de composants (4) avec un dispositif selon l'une des revendications précédentes, lequel comprend une irradiation sélective d'un lit de poudre (6) avec une source de rayonnement, où le composant (4) fabriqué et/ou le lit de poudre (6) sont chauffés simultanément par induction,
**caractérisé en ce**
- **qu'**en partant de la géométrie du composant à fabriquer, la position de plusieurs bobines d'induction (3, 13) est déterminée et réglée pour le chauffage par induction, et
- **qu'**au moins deux bobines d'induction sont déplacées dans un ou plusieurs plans qui sont parallèles à une surface du lit de poudre dans laquelle la poudre est assemblée pour constituer un composant (4) par l'irradiation,
où la première bobine d'induction peut être déplacée le long d'une première direction spatiale et une deuxième bobine d'induction peut être déplacée dans une deuxième direction spatiale, qui est indépendante de la première direction spatiale,
- et **qu'**au moins au niveau d'un point qui est fixé au moins en ce qui concerne une direction spatiale par rapport aux bobines d'induction et/ou au faisceau de la source de rayonnement, la température du lit de poudre et/ou du composant fabriqué est mesurée avec laquelle les paramètres de fonctionnement de la bobine d'induction et/ou de la source de rayonnement sont commandés.

10. Procédé selon la revendication 9,
**caractérisé en ce que**
la position des bobines d'induction est réglée en fonction de la position du faisceau de la source de rayonnement et/ou de la température mesurée.

11. Procédé selon la revendication 9 ou 10,
**caractérisé en ce que**
la première et la deuxième bobine d'induction sont disposées croisées l'une par rapport à l'autre et que le faisceau de la source de rayonnement est disposé dans la zone du croisement.

12. Procédé selon l'une des revendications 9 à 11,
**caractérisé en ce**
**qu'**une bobine d'induction est employée pour le préchauffage du composant et une autre bobine d'induction est employée pour le chauffage ultérieur du composant fabriqué.

13. Procédé selon l'une des revendications 9 à 12,
**caractérisé en ce que**,
pour chaque bobine d'induction, la température est déterminée au niveau d'au moins un point de mesure associé à la bobine d'induction.
